(19) Europäisches Patentamt
European Patent Office
Office européen des brevets

(11) **EP 3 804 897 B1**

(12) **EUROPEAN PATENT SPECIFICATION**

(45) Date of publication and mention
of the grant of the patent:
**12.04.2023   Bulletin 2023/15**

(21) Application number: **18926101.9**

(22) Date of filing: **21.12.2018**

(51) International Patent Classification (IPC):
**B23K 3/03** (2006.01)

(52) Cooperative Patent Classification (CPC):
**B23K 3/033; B23K 3/03**

(86) International application number:
**PCT/JP2018/047384**

(87) International publication number:
**WO 2020/012676 (16.01.2020 Gazette 2020/03)**

(54) **SOLDERING IRON CONTROL DEVICE**

STEUERVORRICHTUNG FÜR LÖTKOLBEN

DISPOSITIF DE COMMANDE DE FER À SOUDER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **12.07.2018   JP 2018132385**

(43) Date of publication of application:
**14.04.2021   Bulletin 2021/15**

(73) Proprietor: **Hakko Corporation
Osaka-shi, Osaka 556-0024 (JP)**

(72) Inventors:
• **MATSUZAKI, Kenji
Osaka-shi, Osaka 556-0024 (JP)**
• **NAKAMURA, Kenta
Osaka-shi, Osaka 556-0024 (JP)**
• **TAKEUCHI, Hitoshi
Osaka-shi, Osaka 556-0024 (JP)**

(74) Representative: **Müller-Boré & Partner
Patentanwälte PartG mbB
Friedenheimer Brücke 21
80639 München (DE)**

(56) References cited:
**WO-A1-2019/031484      DE-A1- 2 708 967
DE-A1- 4 127 156         JP-A- 2008 296 230
JP-A- 2011 212 705       JP-A- 2016 034 665**

# Description

## Technical Field

The present invention relates to a control device that can be electrically connected to a soldering iron and controls the temperature of a tip.

## Background Art

In the electronics industry the task of soldering electronic components is often a manual operation. The soldering function is performed by setting the work area on a work bench. The worker will operate the soldering device facing the work area. The soldering devices may include soldering irons, de-soldering irons, and tweezers but they are not limited thereto. The individual soldering device is connected to a power supply control device. The power supply control device controls the heat generation of the soldering device by adjusting the power applied to the soldering device. Conventional power supply control devices include a power supply portion supplying power to the soldering device, a power supply control portion controlling the power output from the power supply portion, a temperature setting portion for inputting a set temperature which is the control target of the power supply control section, a display for displaying the setting information of the temperature setting portion, and a housing for housing or enclosing the circuitry. The worker or operator operates the temperature setting portion while viewing the information displayed on the display. This operation includes a process to update or set the setting information to the temperature setting portion. The setting information is information related to conditions for determining the set temperature of the soldering device as well as the physical characteristics of the work to be soldered. In industrial applications, the same set of soldering functions may be carried out by the operator, and the supervisors may impose conditions on the soldering operations to promote efficiency and uniformity. For example, the supervisor may set a maximum operating temperature for the power supply control device to prevent overheating of the work during the soldering operations.

In soldering, the solder may not be sufficiently heated, or conversely, the solder may be overheated. In both cases, the soldering becomes defective. Determination as to whether heating of the solder is insufficient and whether the solder is overheated relies on the experience and intuition of the operator. Therefore, an operator who has little experience in soldering is likely to cause defective soldering. DE 27 08 967 A1 describes a soldering iron control device including measuring a first amount of voltage of a temperature measurement unit and comparing it to a target value both in the idle and load state. If the values equal each other, the heating is switched off. Only below a certain threshold the heating is turned on again. This soldering iron control device allows electrical connection to a soldering iron and controls a temperature of a tip of the soldering iron both in the idle and load state.

## Summary of Invention

An object of the present invention is to provide a soldering iron control device that can prevent defective soldering.

A soldering iron control device according to the present invention is a soldering iron control device that allows electrical connection to a soldering iron and controls a temperature of a tip of the soldering iron. The soldering iron control device includes: a first storage unit configured to store in advance a first amount of power to be supplied to the soldering iron in an idling state where the tip is noncontact and the temperature of the tip is maintained within a predetermined range including a set temperature; a measurement unit configured to measure, when the tip enters a load state where the temperature of the tip decreases by a predetermined amount or more from the set temperature by the tip coming into contact with a workpiece, a third amount of power obtained by subtracting the first amount of power from a second amount of power to be supplied to the soldering iron in the load state; a determination unit configured to determine whether the third amount of power exceeds a predetermined threshold; and a notification unit configured to make notification when it is determined that the third amount of power exceeds the threshold.

The above as well as additional objects, features, and advantages of the present invention will become apparent from the following detailed description and the accompanying drawings.

## Brief Description of Drawings

   FIG. 1 is a block diagram showing a configuration of a soldering iron management system according to an embodiment.
   FIG. 2 is a block diagram showing an electric configuration of a soldering iron.
   FIG. 3 is a functional block diagram of a soldering iron control device.
   FIG. 4 is an explanatory diagram describing an example of the number of pulses supplied to a heater unit in accordance with control of a temperature control unit in an idling state and a load state.
   FIG. 5A is a first half of a flowchart describing a measurement operation of a third amount of power.
   FIG. 5B is a second half of the flowchart describing the measurement operation of the third amount of power.
   FIG. 6 provides a block and a schematic diagram of a system of the present invention.
   FIG. 7 schematically shows energizing or powering cycles of a cartridge.

FIG. 8 is a schematic diagram of a load detection circuit.

FIG. 9 is a program logic diagram of software for a load detection function.

FIG. 10A is a program logic diagram (first half) of a cartridge tip management program.

FIG. 10B is a program logic diagram (second half) of the cartridge tip management program.

FIG. 11 shows steps of a basic program logic diagram for updating an offset temperature of the cartridge.

FIG. 12 shows steps of a basic program logic diagram for using acceleration sensor data to control a sleep or shutoff mode.

FIG. 13 is a schematic diagram of the system of the present invention showing subcomponents of the system.

## Description of Embodiment

An embodiment of the present invention will be described in detail below with reference to the drawings. In each of the drawings, a component with the same reference sign indicates the same component, and descriptions of the component already described will be omitted. Note that the following embodiment is one example of embodying the present invention, and does not have nature to limit the technical scope of the present invention.

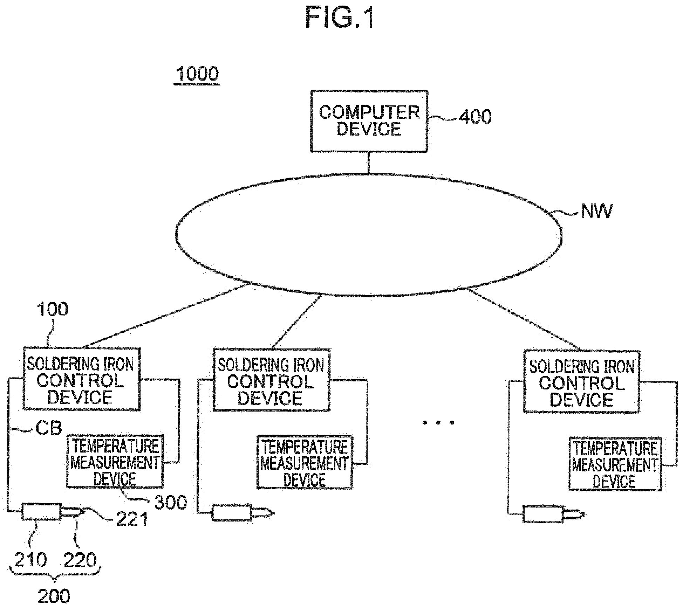

FIG. 1 is a block diagram showing a configuration of a soldering iron management system 1000 according to the embodiment. The soldering iron management system 1000 includes a plurality of soldering iron control devices 100, a plurality of soldering irons 200, a plurality of temperature measurement devices 300, and a computer device 400.

Each of the soldering irons 200 includes a handle part 210 and a cartridge 220. The cartridge 220 can be attached to and detached from the handle part 210. A distal end of the cartridge 220 is a tip 221.

The use of the soldering iron 200 is not limited to soldering. The soldering iron 200 may be used to melt solder in order to de-solder with a de-soldering tool, or may be used to melt solder on an electronic component soldered to a substrate and to remove the electronic component from the substrate. The soldering iron 200 for the latter use is referred to as a hot tweezer.

Each of the temperature measurement devices 300 measures the temperature of the tip 221. The temperature measurement device 300 is used by an operator to manage the temperature of the tip 221. The number of temperature measurement devices 300 may be less than the number of soldering iron control devices 100. For example, the plurality of soldering iron control devices 100 may share one temperature measurement device 300.

Each of the soldering iron control devices 100 is connected to the handle part 210 by a cable CB. In this way, the soldering iron control device 100 is provided separately from the soldering iron 200 such that the soldering iron control device 100 can be electrically connected to the soldering iron 200. The soldering iron control device 100 has functions such as a function of controlling the temperature of the tip 221.

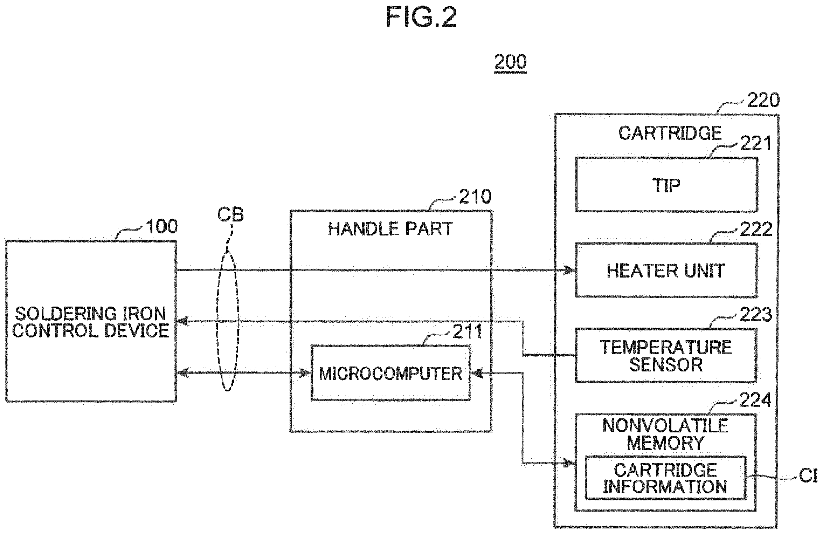

The computer device 400 is connected to the plurality of soldering iron control devices 100 by a network NW. The computer device 400 is, for example, a personal computer such as a desktop computer, a notebook computer, or a tablet computer, or a smartphone. The network NW is, for example, the Internet or an intranet. The computer device 400 has functions such as a function of collecting information stored in a nonvolatile memory 224 (FIG. 2) included in the cartridge 220.

FIG. 2 is a block diagram showing an electric configuration of the soldering iron 200. The cartridge 220 includes the tip 221, a heater unit 222, a temperature sensor 223, and the nonvolatile memory 224.

The heater unit 222 heats the tip 221. A scheme of the heater unit 222 may be, for example, a scheme to heat the tip 221 with a heating element (nichrome wire, ceramics, or the like) (resistance heating scheme), or a scheme to cause the tip 221 to generate heat (high-frequency induction heating scheme).

The temperature sensor 223 is a sensor that is disposed near the tip 221 and used to measure the temperature of the tip 221. The temperature sensor 223 is, for example, a thermocouple. In order to manage the temperature of the tip 221 measured using the temperature sensor 223, the temperature measurement device 300 is used.

The nonvolatile memory 224 can repeatedly write information, and stores predetermined information such as an ID of the cartridge 220 (hereinafter referred to as cartridge information CI). The cartridge information CI is, for example, a shape of the tip 221, a size of the tip 221, or the like in addition to the ID of the cartridge 220. The nonvolatile memory 224 is, for example, an electrically erasable programmable read-only memory (EEPROM).

The handle part 210 includes a microcomputer 211. The microcomputer 211 has, for example, a function of reading the cartridge information CI stored in the nonvolatile memory 224 from the nonvolatile memory 224 and transmitting the cartridge information CI to the soldering iron control device 100 in accordance with instructions from the soldering iron control device 100, and a function of writing the cartridge information CI into the nonvolatile memory 224 in accordance with instructions from the soldering iron control device 100.

The handle part 210 and the soldering iron control device 100 are connected by the cable CB. The cable CB includes a power line that supplies power to the heater unit 222, a signal line that transmits an output signal of the temperature sensor 223, and a communication line used for communication with the microcomputer 211. If power-line carrier communication is used, the signal line and the communication line become unnecessary.

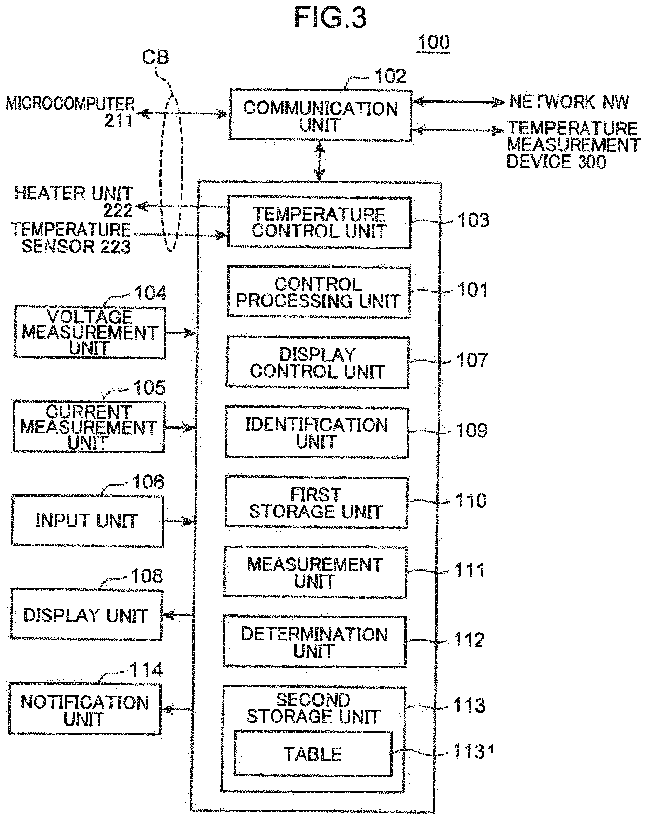

FIG. 3 is a functional block diagram of the soldering iron control device 100. The soldering iron control device 100 includes a control processing unit 101, a communication unit 102, a temperature control unit 103, a voltage measurement unit 104, a current measurement unit 105, an input unit 106, a display control unit 107, a display unit 108, an identification unit 109, a first storage unit 110, a measurement unit 111, a determination unit 112, a second storage unit 113, and a notification unit 114.

The control processing unit 101 is implemented by, for example, a hardware processor such as a central processing unit (CPU), a random access memory (RAM), a read only memory (ROM), and a hard disk drive (HDD), and a program, data, or the like for executing functions of the control processing unit 101. The above description can be applied to the temperature control unit 103, the display control unit 107, the identification unit 109, the measurement unit 111, and the determination unit 112,

The communication unit 102 has a function of communicating with the microcomputer 211 (FIG. 2) included in the handle part 210. In more detail, the communication unit 102 includes, for example, a universal asynchronous receiver transmitter (UART) in order to perform serial communication with the microcomputer 211. In the embodiment, wired communication is taken as an example, but wireless communication may be used (for example, infrared communication such as the infrared data association (IrDA) standard, and Bluetooth (registered trademark)).

The communication unit 102 has a function of communicating with the network NW. In more detail, the communication unit 102 includes, for example, an interface for industrial Ethernet (Ethernet is a registered trademark). In the embodiment, wired communication is taken as an example, but wireless communication may be used (for example, wireless LAN).

The communication unit 102 has a function of communicating with the temperature measurement device 300. In more detail, the communication unit 102 includes, for example, the UART in order to perform serial communication with the microcomputer of the temperature measurement device 300. In the embodiment, wired communication is taken as an example, but wireless communication may be used (for example, infrared communication such as the IrDA standard, and Bluetooth (registered trademark)).

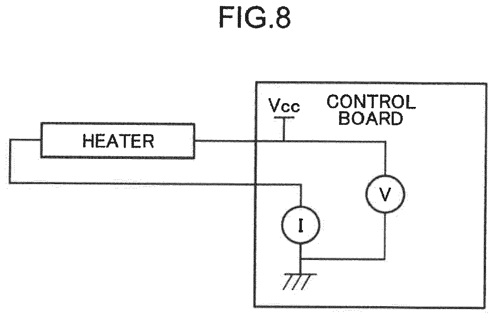

The voltage measurement unit 104 is a circuit that measures a voltage applied to the heater unit 222. The current measurement unit 105 is a circuit that measures a current supplied to the heater unit 222. FIG. 8 shows a connection relationship between the heater unit 222, the voltage measurement unit 104, and the current measurement unit 105. A heater in FIG. 8 corresponds to the heater unit 222, a voltmeter V corresponds to the voltage measurement unit 104, and an ammeter I corresponds to the current measurement unit 105.

With reference to FIG. 3, the voltage measurement unit 104 and the current measurement unit 105 are each connected to a power line that supplies power to the heater unit 222 (this power line is included in the cable CB). The current measurement unit 105 is connected in series between an earth terminal of the heater unit 222 and the earth. The voltage measurement unit 104 is connected in series between a power source terminal of the heater unit 222 and the earth.

The temperature control unit 103 controls the temperature of the heater unit 222 by feedback control, thereby setting the temperature of the tip 221 at a set temperature. In more detail, based on the temperature indicated by the temperature sensor 223 included in the cartridge 220, the voltage measured by the voltage measurement unit 104, and the current measured by the current measurement unit 105, the temperature control unit 103 performs control to calculate an amount of power for setting the temperature indicated by the temperature sensor 223 at the set temperature and to provide the amount of power to the heater unit 222.

The control of the amount of power will be described in detail. The temperature control unit 103 performs full-wave rectification on alternating current from an external AC power source, and adjusts the number of pulses to be supplied to the heater unit 222 from among pulses obtained by the full-wave rectification, thereby controlling the power to be supplied to the heater unit 222. It is assumed that the time required to generate the predetermined number of pulses is one cycle. For example, it is assumed that the predetermined number is 21 pulses. For 60 Hz alternating current, if alternating current undergoes full-wave rectification, 120 pulses are generated per second. The time required to generate one pulse is 0.00833... seconds. Therefore, the time required to generate 21 pulses (1 cycle) is 0.175 seconds (= 21 × 0.00833...).

For 50 Hz alternating current, if alternating current undergoes full-wave rectification, 100 pulses are generated per second. The time required to generate one pulse is 0.01 seconds. Therefore, the time required to generate 21 pulses (1 cycle) is 0.21 seconds (= 21 × 0.01).

The control of the amount of power is not limited to the above scheme, but may be another scheme (for example, pulse width modulation (PWM) control).

The input unit 106 is a device for the operator to make various inputs to the soldering iron control device 100. Specific examples of various inputs will be described. The operator operates the input unit 106 to input the set temperature to the soldering iron control device 100. The operator operates the input unit 106 and inputs an instruction to read and write the cartridge information CI stored in the nonvolatile memory 224 included in the cartridge 220. The input unit 106 is implemented by at least one of a hard key (button, switch, or the like) and a soft key (touch panel).

The display control unit 107 displays various data and information on the display unit 108. For example, the display control unit 107 causes the display unit 108 to display the set temperature or to display the cartridge information CI. The display unit 108 is, for example, a liquid crystal display or an organic EL display (organic light emitting diode display).

The identification unit 109 identifies whether the tip 221 is in a load state. When the tip 221 comes into contact with a workpiece in order to solder the workpiece, the heat of the tip 221 is conducted to the workpiece and the solder, and the temperature of the tip 221 becomes lower than the set temperature. When the temperature of the tip 221 decreases by a predetermined amount or more (for example, 5 degrees) from the set temperature, this is referred to as a load state. In contrast, there is an idling state. The idling state is a state in which the tip 221 is noncontact (the tip 221 is not in contact with the workpiece) and the temperature of the tip 221 is maintained within a predetermined range including the set temperature. The temperature of the tip 221 being set at the set temperature means that the temperature of the tip 221 reaches the set temperature and is set in the idling state. Note that the workpiece means including at least one of an electronic component and a land of a substrate (portion to which the electronic component is soldered) to be soldered.

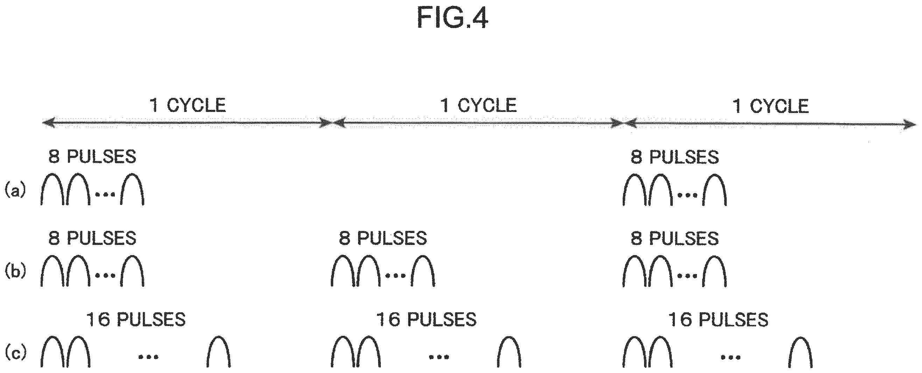

FIG. 4 is an explanatory diagram describing an example of the number of pulses to be supplied to the heater unit 222 in accordance with the control of the temperature control unit 103 in the idling state and the load state. It is assumed that 1 cycle is 0.175 seconds. In the idling state, the amount of power supplied to the heater unit 222 is relatively small (the amount of power supplied to the heater unit 222 differs depending on the room temperature). (a) of FIG. 4 is an example of the number of pulses to be supplied to the heater unit 222 in the idling state. In order to maintain the idling state, the temperature control unit 103 repeats, for example, a cycle to supply 8 pulses to the heater unit 222 and a cycle to supply 0 pulses to the heater unit 222 alternately.

The temperature control unit 103 performs control to make the amount of power to supply to the heater unit 222 larger in the load state than in the idling state to return to the idling state. The temperature control unit 103 increases the amount of power to supply to the heater unit 222 as the load state increases (as the difference between the temperature of the tip 221 and the set temperature increases). The temperature control unit 103 decreases the amount of power to supply to the heater unit 222 as the load state decreases (as the difference between the temperature of the tip 221 and the set temperature decreases).

For example, a description will be made using two load states as an example, (b) of FIG. 4 is an example of the number of pulses to be supplied to the heater unit 222 in a relatively small load state (the difference between the temperature of the tip 221 and the set temperature is relatively small). The temperature control unit 103 repeats a cycle to supply 8 pulses to the heater unit 222, for example, (c) of FIG. 4 is an example of the number of pulses to be supplied to the heater unit 222 in a relatively large load state (the difference between the temperature of the tip 221 and the set temperature is relatively large). The temperature control unit 103 repeats a cycle to supply 16 pulses to the heater unit 222, for example,

Note that in a state where 21 pulses are supplied to the heater unit 222 in 1 cycle, the amount of power of 1 cycle is measured, which is divided by 21 to obtain the amount of power of 1 pulse.

With reference to FIG. 3, the storage unit 110 is implemented by a flash memory, an HDD, or the like, and stores a first amount of power in advance. The first amount of power is an amount of power to be supplied to the soldering iron 200 in the idling state. The amount of power to be supplied to the soldering iron 200 is an amount of power to be supplied to the heater unit 222. The period (time) used for calculating the first amount of power is 1 cycle.

A method for measuring the first amount of power will be described in detail. With reference to FIGS. 3 and 4, in the idling state, by using the current measured by the current measurement unit 105 and the voltage measured by the voltage measurement unit 104, the measurement unit 111 calculates an amount of power e1 of 1 cycle by using the following formula.

$$e1 = I1 \times V1 \times S$$

I1 is a current measured by the current measurement unit 105 in the idling state. V1 is a voltage measured by the voltage measurement unit 104 in the idling state. S is 1 cycle.

In the idling state, in 1 cycle, not all 21 pulses are supplied to the heater unit 222, but a predetermined number N of (for example, 8) pulses is supplied to the heater unit 222. In the idling state, there is a cycle in which no pulse is supplied to the heater unit 222. Here, it is assumed that a cycle to supply pulses to the heater unit 222 and a cycle to supply no pulses are repeated alternately. The measurement unit 109c calculates a first amount of power E1 by using the following formula.

$$E1 = (N / 21 \times e1) / 2$$

The first amount of power E1 is measured in advance by the measurement unit 111 for each set temperature. The first storage unit 110 stores in advance a table in which the first amount of power E1 is associated with each set temperature.

The measurement unit 111 measures a third amount of power obtained by subtracting the first amount of power from a second amount of power. The second amount of power is an amount of power to be supplied to the soldering iron 200 when the tip 221 is in the load state. The first amount of power is an amount of power to be supplied to the soldering iron 200 when the tip 221 is in the idling state. The third amount of power is an amount of power obtained by subtracting the first amount of power from the second amount of power. Therefore, in the load state, thermal energy generated by the third amount of power is applied to the workpiece and the solder (in more accurately, thermal energy obtained by subtracting thermal energy radiated from the workpiece and the solder into the air from the thermal energy generated by the third amount of power is applied). In other words, the third amount of power is a thermal load for the workpiece and the solder in the load state.

If the third amount of power is too small, heating of the workpiece and the solder will be insufficient, and if the third amount of power is too large, the workpiece and the solder will be overheated. The soldering iron control device 100 according to the embodiment can measure the third amount of power and thus can meet a requirement for ensuring traceability of soldering.

Note that the amount of power (first amount of power, second amount of power, third amount of power) is electric energy, and the unit of the amount of power is Joule.

The time (period) used for calculating the second amount of power is 1 cycle. A method for measuring the second amount of power will be described in detail.

In the load state, by using the current measured by the current measurement unit 105 and the voltage measured by the voltage measurement unit 104, the measurement unit 111 calculates an amount of power $e2$ of 1 cycle by using the following formula.

$$e2 = I2 \times V2 \times S$$

$I2$ is a current measured by the current measurement unit 105 in the load state. $V2$ is a voltage measured by the voltage measurement unit 104 in the load state. $S$ is 1 cycle.

In the load state, in 1 cycle, not all 21 pulses are supplied to the heater unit 222, but a predetermined number $N$ of (for example, 8, 16) pulses is supplied to the heater unit 222. The measurement unit 109c calculates a second amount of power $E2$ by using the following formula.

$$E2 = N / 21 \times e2$$

Until the load state is canceled, the measurement unit 111 repeatedly measures the second amount of power in units of 1 cycle (predetermined period), repeatedly calculates a value obtained by subtracting the first amount of power from the second amount of power in units of 1 cycle (predetermined period), and integrates this value. This integrated value is the third amount of power. Before the measurement of the third amount of power finishes, the display control unit 107 may cause the display unit 108 to display the integrated value. This allows the operator to determine the progress of the third amount of power.

For example, timing to return from the load state to the idling state may be defined as timing when the load state is canceled, or timing when the tip 221 is separated from the workpiece and the solder may be defined as timing when the load state is canceled. The timing when the tip 221 is separated from the workpiece and the solder refers to, for example, timing when the temperature of the tip 221 stops decreasing, the temperature of the tip 221 fluctuates little by little, and then the temperature starts to rise toward the set temperature.

The measurement unit 111 finishes the measurement of the third amount of power when the load state is canceled. The measurement unit 111 determines the integrated value at this time as the third amount of power.

The determination unit 112 determines whether the third amount of power measured by the measurement unit 111 exceeds a threshold. The threshold includes a first threshold and a second threshold. The first threshold is used to determine whether heating of the workpiece and the solder is insufficient. The first threshold is larger (slightly larger) than a boundary value of whether heating of the workpiece and the solder is insufficient. With such a value, when it is notified that the third amount of power exceeds the first threshold, even if the tip 221 is separated from the workpiece and the solder, heating of the workpiece and the solder is not insufficient.

The second threshold is used to determine whether the workpiece and the solder are overheated. The second threshold is greater than the first threshold. The second threshold is smaller (slightly smaller) than a boundary value of whether the workpiece and the solder are overheated. With such a value, when it is notified that the third amount of power exceeds the second threshold, if the tip 221 is separated from the workpiece and the solder, the workpiece and the solder are not overheated.

The description is made using two thresholds (first threshold, second threshold), but only the first threshold may be used, or only the second threshold may be used.

Since the thresholds (first threshold, second threshold) differ depending on soldering conditions, it is necessary to determine the thresholds in advance according to the soldering conditions. Examples of parameters that make up the soldering conditions include the size of the tip 221, the shape of the tip 221, the size of the workpiece, the material of the workpiece, the type of solder, and the setting temperature of the tip 221. If even one of these parameters is different, the soldering will be under different conditions.

The thresholds are examined by a skilled operator. A detailed description will be provided. The skilled operator repeats soldering using the soldering iron control device 100 under the same condition to examine the third amount of power that is the first threshold and the third amount of power that is the second threshold. The operator makes the soldering condition different to examine the third amount of power that is the first threshold and the third amount of power that is the second threshold.

In the second storage unit 113, a table 1131 in which the conditions and the thresholds (first threshold, second threshold) are associated with each other for each of the plurality of conditions is stored in advance. Conditions A, B, and C will be described as examples. The condition A and the thresholds (first threshold, second threshold) examined under the condition A are associated with each other. The condition B and the thresholds (first threshold, second threshold) examined under the condition B are associated with each other. The condition C and the thresholds (first threshold, second threshold) examined under the condition C are associated with each other. The second storage unit 113 is implemented by a flash memory, HDD, or the like.

Instead of the second storage unit 113, the table 1131 may be stored in advance in the nonvolatile memory 224 provided in the cartridge 220.

The notification unit 114 makes notification when it is determined that the third amount of power exceeds the thresholds (first threshold, second threshold). Since the operator concentrates eyes on the tip 221 during the work, it is preferable that the notification is made by a voice. For a voice, the notification unit 114 is implemented by a speaker and an amplifier. To allow the operator to distinguish between the first and second thresholds, it is preferable that the sound produced when the third amount of power exceeds the first threshold and the sound produced when the third amount of power exceeds the second threshold are different from each other. The notification may be made by an image instead of a voice. For an image, the notification unit 114 is implemented by the display control unit 107 and the display unit 108.

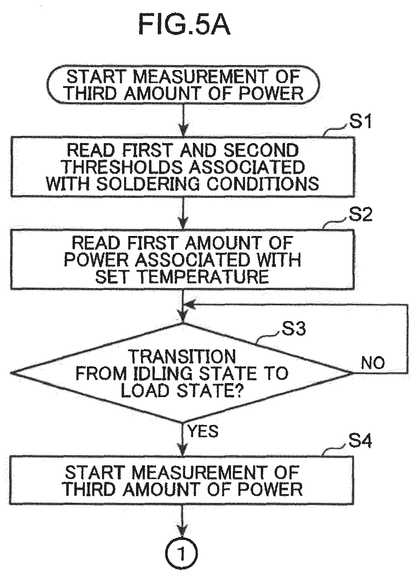

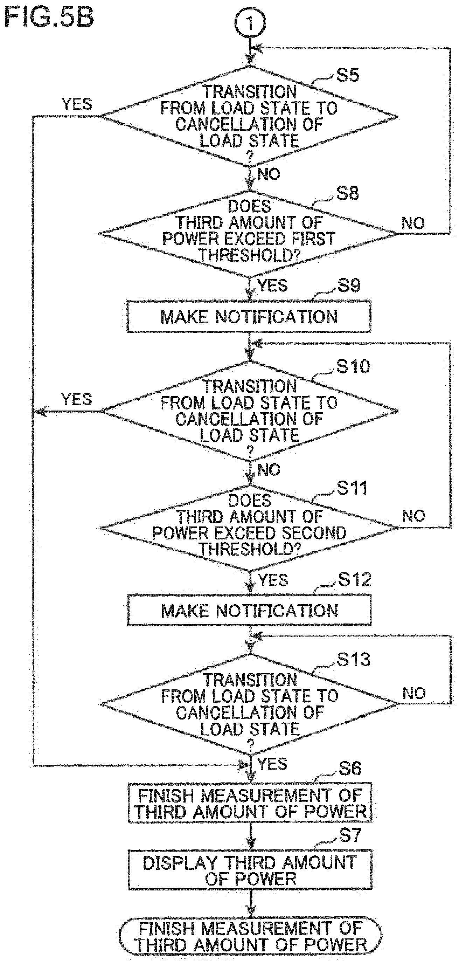

A measurement operation of the third amount of power will be described. FIGS. 5A and 5B are flowcharts describing the measurement operation of the third amount of power. With reference to FIGS. 2, 3 and 5A, before performing the soldering operation, the operator uses the input unit 106 to input the soldering conditions into the soldering iron control device 100. With reference to the table 1131, the determination unit 112 reads the first and second thresholds associated with the input conditions from the second storage unit 113 (step S1). The determination unit 112 determines whether the third amount of power exceeds these thresholds.

In an aspect in which the table 1131 is stored in the nonvolatile memory 224, the following processing is performed before step S1. The control processing unit 101 gives an instruction to the microcomputer 211 provided in the handle part 210 to read the table 1131 stored in the nonvolatile memory 224 at predetermined timing. According to this instruction, the communication unit 102 transmits a read instruction of the table 1131 to the microcomputer 211, and receives the table 1131 transmitted from the microcomputer 211 in response to the read instruction. The control processing unit 101 stores the table 1131 in the second storage unit 113.

Return to the description of the measurement operation of the third amount of power. The temperature control unit 103 performs feedback control to set the temperature of the tip 221 at the set temperature. The measurement unit 111 reads the first amount of power associated with the set temperature of the feedback control from the first storage unit 110 (step S2). The identification unit 109 determines in the feedback control state whether transition from the idling state to the load state has been made (step S3). When the identification unit 109 determines that the transition has not been made (No in step S3), the process of step S3 is repeated.

When the identification unit 109 determines that the transition from the idling state to the load state has been made (Yes in step S3), the measurement unit 111 starts measurement of the third amount of power (step S4).

With reference to FIGS. 2, 3, and 5B, the identification unit 109 determines whether transition from the load state to cancellation of the load state has been made (step S5). When the identification unit 109 determines that the transition has been made (Yes in step S5), the measurement unit 111 finishes the measurement of the third amount of power (step S6). The measurement unit 111 determines the integrated value at this time as the third amount of power. The display control unit 107 causes the display unit 108 to display the determined third amount of power (step S7).

When the identification unit 109 determines that the transition from the load state to cancellation of the load state has not been made (No in step S5), the determination unit 112 determines whether the third amount of power measured by the measurement unit 111 exceeds the first threshold (step S8). When the determination unit 112 determines that the third amount of power does not exceed the first threshold (No in step S8), the identification unit 109 performs the process of step S5.

When the determination unit 112 determines that the third amount of power exceeds the first threshold (Yes in step S8), the determination unit 112 notifies the operator (step S9). This allows the operator to recognize that heating of the workpiece and the solder by the soldering iron 200 is not insufficient.

After step S9, the identification unit 109 determines whether the tip has transitioned from the load state to cancellation of the load state (step S10). When the identification unit 109 determines that the transition has been made (Yes in step S10), the measurement unit 111 finishes the measurement of the third amount of power (step S6). The measurement unit 111 determines the integrated value at this time as the third amount of power. The display control unit 107 causes the display unit 108 to display the determined third amount of power (step S7).

When the identification unit 109 determines that the transition from the load state to cancellation of the load state has not been made (No in step S10), the determination unit 112 determines whether the third amount of power measured by the measurement unit 111 exceeds the second threshold (step S11). When the determination unit 112 determines that the third amount of power does not exceed the second threshold (No in step S11), the identification unit 109 performs the process of step S10.

When the determination unit 112 determines that the third amount of power exceeds the second threshold (Yes in step S11), the determination unit 112 notifies the operator (step S12). This allows the operator to recognize that the workpiece and the solder will be overheated unless the tip 221 is separated from the workpiece and the solder.

After step S12, the identification unit 109 determines whether the tip has transitioned from the load state to cancellation of the load state (step S13). When the identification unit 109 determines that the transition has not been made (No in step S13), the identification unit 109 repeats the process of step S13.

When the identification unit 109 determines that the transition has been made (Yes in step S13), the measurement unit 111 finishes the measurement of the third amount of power (step S6). The measurement unit 111 determines the integrated value at this time as the third amount of power. The display control unit 107 causes the display unit 108 to display the determined third amount of power (step S7).

Main effects of the embodiment will be described. The soldering iron control device 100 monitors the third amount of power by using the first and second thresholds (steps S8, S9, S11, S12 of FIG. 5B). This makes it possible to prevent defective soldering. Such a soldering iron control device 100 makes it possible to implement soldering without relying on the experience and intuition of the operator.

(Summary of Embodiment)

A soldering iron control device according to the present embodiment is a soldering iron control device that allows electrical connection to a soldering iron and controls a temperature of a tip of the soldering iron. The soldering iron control device includes: a first storage unit configured to store in advance a first amount of power to be supplied to the soldering iron in an idling state where the tip is noncontact and the temperature of the tip is maintained within a predetermined range including a set temperature; a measurement unit configured to measure, when the tip enters a load state where the temperature of the tip decreases by a predetermined amount or more from the set temperature by the tip coming into contact with a workpiece, a third amount of power obtained by subtracting the first amount of power from a second amount of power to be supplied to the soldering iron in the load state; a determination unit configured to determine whether the third amount of power exceeds a predetermined threshold; and a notification unit configured to make notification when it is determined that the third amount of power exceeds the threshold.

When soldering is performed, the tip is first brought into contact with the workpiece, the workpiece is heated, and in this state, the solder is brought into contact with the tip to melt the solder. When the soldering is finished, the tip is separated from the workpiece and the solder. Note that the workpiece means including at least one of an electronic component and a land of a substrate (portion to which the electronic component is soldered) to be soldered. The following workpiece also has this meaning.

The first amount of power is an amount of power to be supplied to the soldering iron in the idling state. The second amount of power is an amount of power to be supplied to the soldering iron in the load state. The third amount of power is an amount of power obtained by subtracting the first amount of power from the second amount of power. Therefore, in the load state, thermal energy generated by the third amount of power is applied to the workpiece and the solder (in more accurately, thermal energy obtained by subtracting thermal energy radiated from the workpiece and the solder into the air from the thermal energy generated by the third amount of power is applied). In other words, the third amount of power is a thermal load for the workpiece and the solder in the load state. If the third amount of power is too small, heating of the workpiece and the solder will be insufficient, and if the third amount of power is too large, the workpiece and the solder will be overheated. The soldering iron control device according to the present embodiment can measure the third amount of power and thus can meet a requirement for ensuring traceability of soldering.

Examples of the threshold include the first threshold to be used to determine whether heating of the workpiece and the solder is insufficient and the second threshold to be used to determine whether the workpiece and the solder are overheated. The first threshold is larger (slightly larger) than a boundary value of whether heating of the workpiece and the solder is insufficient. With such a value, when it is notified that the third amount of power exceeds the first threshold, even if the tip is separated from the workpiece and the solder, heating of the workpiece and the solder is not insufficient. The second threshold is smaller (slightly smaller) than a boundary value of whether the workpiece and the solder are overheated. With such a value, when it is notified that the third amount of power exceeds the second threshold, if the tip is separated from the workpiece and the solder, the workpiece and the solder are not overheated. Only the first threshold may be set, or only the second threshold may be set.

The notification unit makes notification when it is determined that the third amount of power exceeds the threshold. Therefore, the soldering iron control device according to the present embodiment makes it possible to prevent defective soldering. Such a soldering iron control device makes it possible to implement soldering without relying on the experience and intuition of the operator.

In the configuration described above, the soldering iron includes a handle part and a cartridge that is attachable to and detachable from the handle part and includes the tip and a nonvolatile memory, and the threshold is stored in advance in the nonvolatile memory.

The nonvolatile memory provided in the cartridge is one example of a means to store the threshold. The nonvolatile memory is preferably a type that can repeatedly write information.

In the configuration described above, an input unit configured to input a table that associates a soldering condition with the threshold and a second storage unit configured to store in advance the table that is input by using the input unit are further provided. When the condition is input by using the input unit, the determination unit reads the threshold corresponding to the input condition from the second storage unit, and determines whether the third amount of power exceeds the threshold.

This configuration allows the user (operator, administrator of the operator, or the like) to set the threshold according to the soldering condition.

In the above configuration, the measurement unit measures the third amount of power by repeatedly measuring the second amount of power in units of a period used to calculate the first amount of power, repeatedly calculating a value obtained by subtracting the first amount of power from the second amount of power in units of the period, and integrating the value.

This configuration is a specific example of a method of measuring the third amount of power.

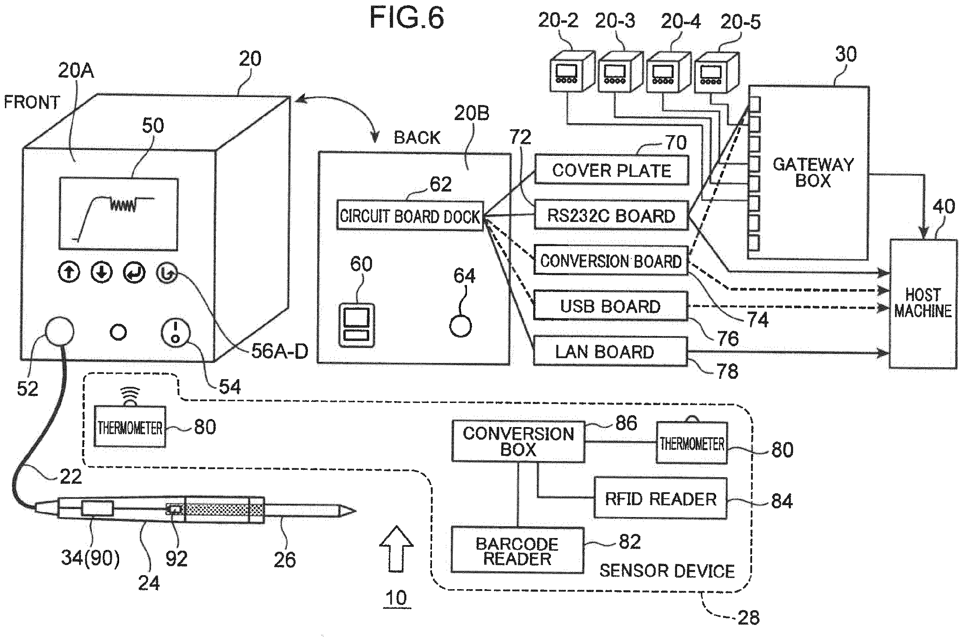

The following is details of the United States provisional application (US62/543,797). As shown in FIG. 6, the United States provisional application provides a system 10, a control station 20, a sensor device 28, a host machine 40, and a memory element 92. The system 10 corresponds to the soldering iron management system 1000, the control station 20 corresponds to the soldering iron control device 100, the sensor device 28 corresponds to the temperature measurement device 300, the host machine 40 corresponds to the computer device 400, and the memory element 92 corresponds to the nonvolatile memory 224.

In the US provisional application, the title of the invention is Composite Soldering, De-Soldering Station System.

In the US provisional application, the following is described as ABSTRACT. A soldering and de-soldering station and systems including enhanced features for the soldering heating tools, load detection functionality, tip management, automatic tip temperature calibration, cartridge/handle position and movement sensing and interactive capabilities.

In the US provisional application, the following is described as Brief Summary of the Invention. The present invention is directed to the components of an interchangeable multicomponent system including a control station, heating tools comprising a handle and cartridges, associated sensor equipment and components, and components allowing interconnectability to a host or server via an intranet or internet. The control station includes enhanced features for interacting with and controlling the soldering heating tools, load detection functionality, tip management, automatic tip temperature calibration, cartridge/handle position and movement sensing and gateway or host system interactive capabilities.

In the US provisional application, the following is described as Detailed Description of the Invention.

FIG. 6 provides a block and schematic depiction of a system 10. The system 10 is configured around a control station 20, which is connected via a cable assembly 22 to a handle 24 and cartridge 26. The control station 20 provides control signals and power to the cartridge 26, which an operator uses to carry out the soldering or de-soldering operations. The control station 20 is adapted to communicate with various sensor devices 28, as well as a gateway box 30 and a host machine 40. The host machine 40 may be a component of a protected intranet system, and it may alternatively be connected to the internet.

The control station 20 has a front panel 20A and a rear panel 20B, depicted side by side in FIG. 6. On the front panel 20A, the control station 20 has a display 50, for example a liquid crystal display (LCD), although other displays for example a light emitting diode (LED) display may be used. The front panel 20A also includes a socket 52 allowing connection to the cable assembly 22, and a power switch 54 for powering the control station 20 on and off. The front panel 20A also includes a number of control or data entry components, depicted as buttons 56A, 56B, 56C, and 56D. It may be appreciated that the data entry components may be any number of electrical components including for example toggle switches, knobs, dials, and touch or optical sensors.

The rear panel 20B of the control station 20 includes a power socket 60, a circuit board dock 62 and one or more connector ports 64. FIG. 6 schematically depicts various items that may be affixed to the circuit board dock 62, including for example a cover plate 70, an RS232C circuit board 72, a conversion board 74, a USB connector board 76 and a LAN board 78. Each of these boards 72, 74, 76 and 78 may be used with appropriate cabling to connect the control station 20 to the gateway box 30 or the host machine 40. The board may be for any of Ethernet for Control Automation Technology (EtherNetCAT), Ethernet Industrial Protocol (EtherNet/IP), CAN (Controller Area Network), UART (Universal Asynchronous Receiver/Transmitter) or I2C (Inter-Integrated Circuit), SPI (Serial Peripheral Interface).

The sensor devices 28 may include one or more thermometers 80, a barcode reader 82 and/or an RFID reader 84. The system 10 contemplates that a wired thermometer 80, the barcode reader 82 and the RFID reader 84 may be coupled to a conversion box 86 that converts the respective data signals to data that may be used by the control station 20.

FIG. 6 also schematically depicts the handle 24 securing the cartridge 26. The handle 24 may include an acceleration sensor 34 and the cartridge 26 may include a memory element 92, for example a PROM, EPROM or EEPROM. The memory element 92 may be used to store information specific to the type of cartridge that cannot be changed (fixed data) and it may store information that is written to the memory by or via the control station 20 (variable data). The fixed data may include for example a cartridge serial number, tip shape data, and factory set temperature data for each cartridge 26. The variable data may include programmed set temperature data, temperature offset values, applied load counts, totaled powered time, total solder operations, and any use with leaded solder. Applied load counts may account for non-solder operations (thus a number higher than total solder operations) or it could be a total on powered time.

[Load detection function]

The control station 20 preferably includes a load detection function for identifying and quantifying the thermal load on the cartridge 26 during each soldering operation. By detecting the thermal load imposed when parts are being heated to the temperature at which the solder is liquefied, and the load required to liquefy the solder, and timing the duration of the load, each load cycle for each soldering operation can be measured, counted and monitored. By counting the load cycles associated with a specific cartridge 26, the cartridge life can be monitored. In addition, by measuring the load cycle, the solder load for each soldering activity may be recorded and used for traceability of the work, as discussed further below. Also, once the control station 20 has recorded a defined load cycle for a particular soldering activity, or alternatively when a user defines a load cycle range for a particular soldering activity, the control station 20 can provide an indication to the operator when the load cycle of a subsequent soldering operation is outside an acceptable range of the defined load cycle.

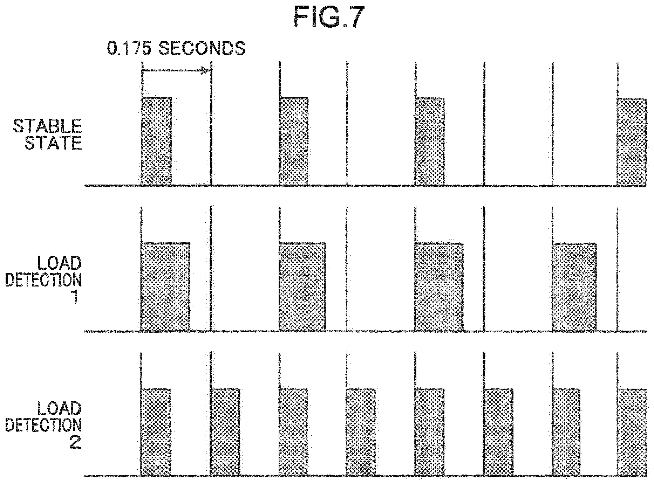

FIG. 7 schematically depicts the energizing or energizing cycles of the cartridge 26 in time spaced blocks, depending on the use of soldering cartridge 26. As depicted in FIG. 7, the cartridge 26 is powered at a 60Hz cycle, and the load or amount energized is determined every 0.175 seconds, i.e. 21 pulses. The energized length will be varied depending on the cycle. For example, when the cartridge 26 is powered at a 50Hz cycle, the load or amount energized is determined every 0.21 seconds, i.e. 21 pulses. The amount of the energized load is determined depending on the difference of the set temperature point and the actual temperature as measured by a temperature sensor located in the cartridge tip. Normally when the temperature of the tip is idling at the set temperature point power level, the difference between the set temperature point temperature and the actual temperature measured by the temperature sensor is small, so the load amount as determined to be minimal. When a soldering operation is initiated, the load on the cartridge 26 increases because heat is being transferred from the cartridge 26 to the work and the control station 20 increases the power output to the cartridge 26. As the amount of energy delivered to energize the cartridge 26 increases, or even if the amount stays the same but the frequency of the energization cycle increases, the system 10 will determine that a soldering load is being applied. When the amount of energy delivered to energize the cartridges 26 returns to close to the idling state, the control station 20 will judged that the soldering load has ended. The soldering load is not detected in only one cycle (0.175 seconds, 21 pulses) but it is determined based upon the total energy within the time period that the thermal load is applied.

The foregoing description of the load determination is provided as an exemplary of the method. The method of identification of the load may change or may need to be adapted to accommodate changes in the circuit components other elements, such as heater performance. However, detecting the load will preferably rely upon identifying the temperature difference of the set temperature and the actual tip temperature measured by a temperature sensor.

FIG. 8 provides a simplified schematic of the load detection circuit. In this embodiment, the control station 20 detects the supplied voltage V and the supplied current I. From the detected V and I, the input energy W can be calculated ($V \times I = W$). The control station 20 calculates the thermal load in joules J, as the product of the input energy W over the length of time S, as follows: $W \times S = J$. The energy Ji applied during an idling state when no soldering load is applied to the cartridge tip is calculated in the control station 20 at predetermined time intervals. When a load is detected, the control station 20 calculates the soldering thermal load energy Js over the length of time Ss that the soldering load is applied.

$$W \times Ss = Js$$

From the energy Js under load and the energy Ji at the idling state, the control station 20 can calculate the thermal load in joules Jt1 used in the soldering operation as: $Js - Ji = Jtl$. This calculated Jt1 is the input energy to the load and may be set as the defined load cycle.

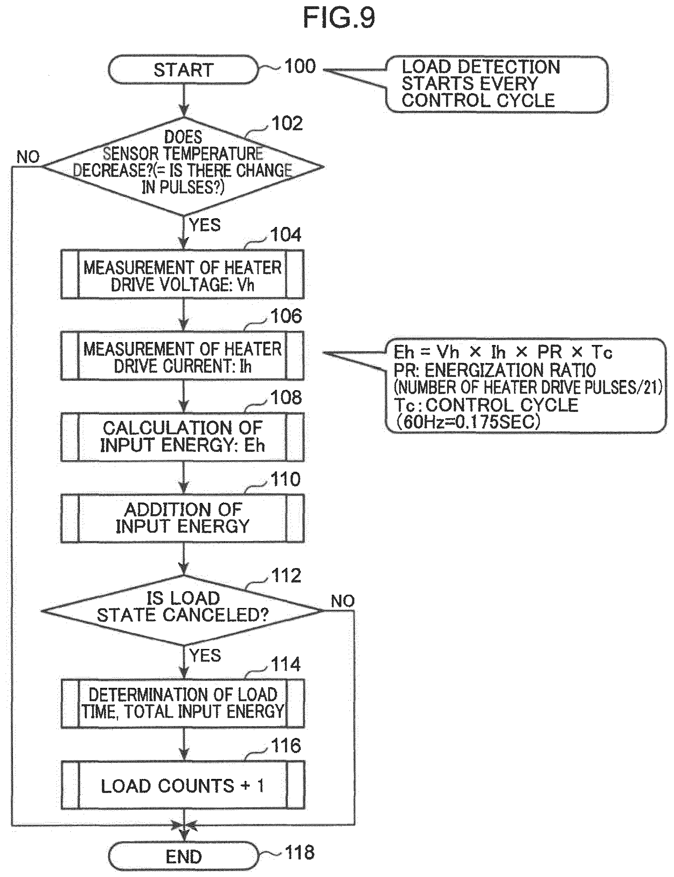

FIG. 9 provides a program logic diagram for the software for the load detection function. The "Start" 100 of the load detection cycle is initiated with every control cycle, such that whenever the control station 20 is on and a cartridge 26 is being powered, the load detection function is operational. At step 102, the determination is made as to whether the cartridge tip temperature sensor temperature has dropped. If yes, then at step 104 the control station 20 measures the cartridge heater drive voltage V. At step 106, the control station 20 measures the cartridge heater drive current I. At step 108, the control station 20 calculates the required additional input energy requirement of the cartridge 26. At step 110, the additional input energy E is delivered to the cartridge 26. At step 112, the control station 20 makes the determination as to whether the load has been removed or cleared, i.e. the soldering function has been completed. If at step 112 the determination is "yes," then the control station 20 determines the total load time and the total input energy delivered to the cartridge 26 for the soldering operation. Next, at step 116, the control station 20 increments the memory field for the loads. After the completion of the cycle, the control station 20 continues to the end step 118. If the step 102 determination is "no", then the control station 20 proceeds to the end step 118. Also, when in step 112 the load status is not cleared, then the control station 20 continues to the end step 118.

[Tip Management Function]

As discussed above with respect to FIG. 6, the cartridge 26 may include a memory element 92, for example a PROM, EPROM or EEPROM. The memory element 92 may be used to store information specific to the type of cartridge that cannot be changed (fixed data) and it may store information that is written to the memory by the control station 20 (variable data). The fixed data includes information that is specific to the identification and design requirements of a specific cartridge 26. Soldering cartridge tips may have many different designs configured for particular soldering operations. Accordingly, the cartridge tips may for example be pointed, round, triangular, beveled cones, square, rectangular or chisel, and they may be of various sizes and dimensions. The design of the tip, and the thermal mass of the tip, both impact the delivery of heat from a heating element within the cartridge 26 through the cartridge tip to the work being soldered.

Very small tips efficiently transfer thermal energy from the heating element of the cartridge 26 to the work, but their low thermal mass means that when the tip first contacts the work, the tip temperature can drop rapidly, and thus may be easily sensed, causing the power delivered to the control station 20 to increase. By comparison, larger tips require higher power levels to maintain a tip temperature, but their larger size and thus larger thermal mass balance the heat transfer process so that the tip temperature may not decrease significantly when the tip contacts the work and thermal transfer to the work is initiated.

The system 10 of the present invention is configured to be used with a substantial number of different soldering and de-soldering tools, and thus a wide variety of different heating element configurations and cartridge tip designs. It is therefore beneficial to provide the option of a memory element 92 in the cartridge 26 that stores particular information concerning the cartridge 26 and the cartridge tip. For example, each cartridge 26 may be assigned a unique serial number that may be read by the control station 20 when the cartridge 26 is inserted into the handle 24, and the control station 20 is powered on. A first portion of the serial number may identify the model number of a particular cartridge series and a second portion of the serial number may uniquely identify each individual cartridge 26 in the model number. The control station 20 may read the first portion of the serial number and, by reference to a look-up table stored in a memory of the control station 20, identify characteristics common to the particular model number of the cartridge 26. For example, the characteristics may include the set temperature as well as minimum and maximum operating temperatures. Alternatively, the control station 20 may read the serial number of the cartridge 26 and then the control station 20 may query the host machine 40, directly or through the gateway box 30, for specific information or operating instructions concerning the particular cartridge 26.

The memory element 92 of the cartridge 26 may be programmed with a variety of information concerning the cartridge 26 and its tip. For example, the memory element 92 may be programmed with information concerning the tip shape, the set temperature that the control station 20 should use for the cartridge 26 for a particular cartridge model, an offset temperature unique to the cartridge 26, an "applied load" count reflecting the number of times that the cartridge has been used to solder a component, the total "powered on" time for the cartridge 26. The memory element 92 may also be programmed to record the average energy used for a soldering operation, and it may allow user programming of soldering parameters that the control station 20 may use to monitor specific soldering operations.

The control station 20 may read the information of the memory element 92 of the cartridge 26 and based upon its own programming or by querying the host machine 40 for instructions, utilize the programmed data from the memory element 92 to control the delivery of power to, and the use of, the particular cartridge 26. For example, the control station 20 may read the set temperature data for the cartridge 26 to establish and display the set temperature for the operator. The set temperature may be set when the cartridge is manufactured, or it may be programmed by the operator using the control station 20 for particular soldering operations or solders. The set temperature may also be set by the host machine 40 providing instructions to the control station 20. While a certain model series of cartridges may all have similar set temperatures, each individual cartridge may be unique, for example because of its use history the actual temperature of the tip when powered on may be different from the set temperature. Accordingly, by comparing the actual tip temperature based upon either a tip temperature sensor or an external thermometer, a control station 20 may determine an offset temperature for a specific cartridge 26. The offset temperature may be recorded to the memory element 92 and used to adjust the standardized tip temperature power level to an offset tip temperature power level.

The memory element 92 may also maintain a record of the total applied load count as well as a total powered time for the cartridge 26. The data for these counts may be used and uploaded to the host machine 40. The information may be useful to establish a baseline life expectancy for specific cartridges 26 used in repetitive soldering operations, and for recognizing when cartridges fail prematurely. Once a baseline is established for a particular cartridge model, the control station 20 or the host machine 40 may recognize when a replacement cartridge is nearing the end of its expected useful life.

The memory element 92 may also include a "lead solder" flag that may be triggered the first time that the cartridge 26 is used with leaded solder. The "lead solder" flag may be used by the control station 20 to warn an operator not to use a particular cartridge that has previously been sued with solders containing lead to avoid cross-contamination of a work that must be lead free. The information of the memory element 92 may also be used to cause the control station 20 to output warnings to the operator, either by visual or audible signals, and may be used to prevent the operator from using a particular cartridge 26 until the operator affirmatively acknowledges the warning signal. For example, the control station 20 may provide a warning, and it may not power up a cartridge 26, if the "lead solder" flag has been read by the control station 20. In that case, the user may be required to activate one of the buttons 56A - 56D to acknowledge the "lead solder" warning and confirm to the control station 20 that the cartridge 26 may be powered on. The "lead solder" flag is particularly significant as it may be read by any control station 20, even the control station 20 that did not originally trigger the flag, so that a cartridge 26 that is borrowed or exchanged between work stations does not accidentally cross contaminate a work piece. Preferably, the "lead solder" flag is written to a portion of a memory in the memory element 92 that, once triggered, cannot be reset accidentally or purposefully.

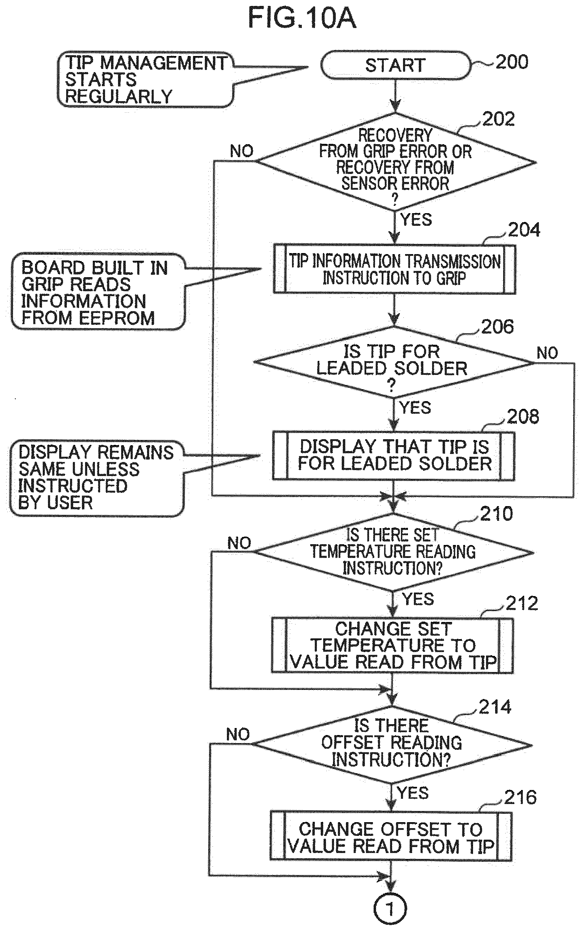

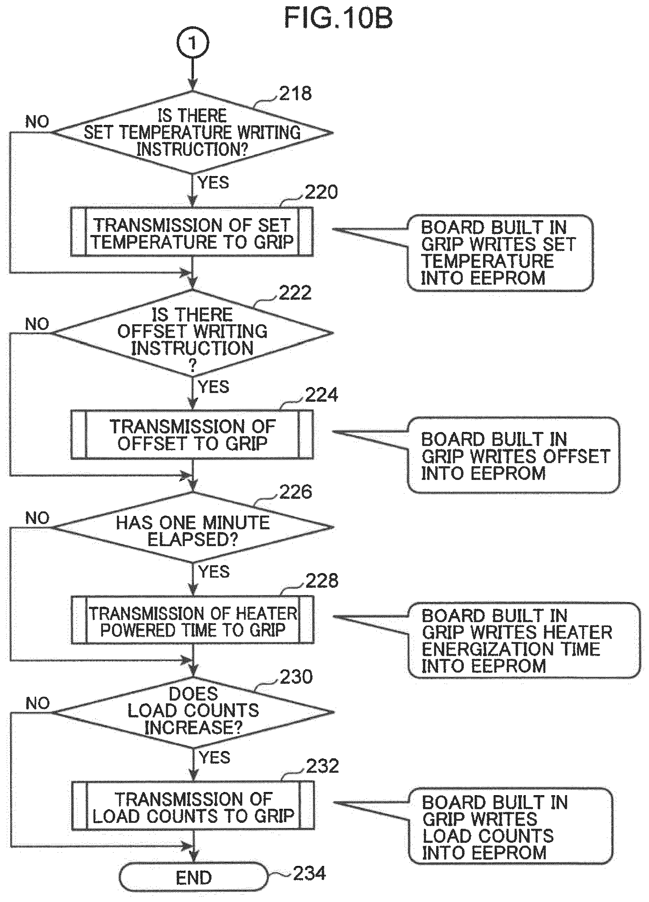

An exemplary cartridge tip management program for the control station 20 or host machine 40 is depicted in FIGS. 10A and 10B. The "start" 200 of the cartridge tip management program is initiated when a new cartridge 26 is inserted in the handle 24, and the control station 20 is powered on. The "start" 200 of the cartridge tip management program may also be activated periodically on a schedule programmed into the control station 20 or the host machine 40.

At step 202, the determination is made as to whether the control station 20 is being reset as a result of a handle error or sensor error, which detects if the cartridge tip has been removed or replaced or if the grip is not connected to the control station 20. If a handle error or sensor error has occurred and thereafter the error is corrected and the system has recovered from the error, and when the control station 20 is initially turned on, then the program proceeds to step 204, where the control station 20 queries the memory element 92 to data stored in the memory element 92. At step 206, the control program determines if the data from the memory element 92 includes a "lead solder" flag. If yes, then the program goes to step 208 where the program outputs a display or an alert on the control station 20 to advise the operator that the cartridge 26 has been used with leaded solder.

If at step 202 or at step 206, the determination is no, and after step 208, the program proceeds to step 210. At step 210, the program determines if there is a command to read the set temperature for the cartridge 26. If the determination at step 210 is yes, then the program proceeds to step 212 where the program changes the set temperature for the control station 20 to the set temperature retrieved from the memory element 92 of the cartridge 26. After step 212, or if the determination at step 210 is no, the program proceeds to step 214.

At step 214, the program determines if there is an instruction to read the offset temperature. If there is such a command, the offset temperature is read from the memory element 92 and then the program proceeds to step 216, where the program changes the control set temperature using the offset temperature value retrieved from the memory element 92. After step 216, or upon a negative determination at step 214, the program proceeds to step 218. At step 218, the program determines if there is a command to write an updated set temperature to the memory element 92. If the determination is yes, then the program proceeds to step 220, where the control station 20 sends a command through the handle 24 to the cartridge 26 to update the set temperature for the cartridge 26 that is stored in the memory element 92. After step 220, or after a negative determination at step 218, the program proceeds to step 222. At step 222, the program determines if there is an instruction to write a new offset temperature value. If there is such an instruction, the program proceeds to step 224 where the program sends new data for the offset temperature through the handle 24 to the memory element 92 in the cartridge 26. After step 224, or after a negative determination at step 222, the program proceeds to step 226.

At step 226, a timing function is initiated and the program determines if one minute has passed. Upon a determination that one minute has passed, and for each minute that the cartridge 26 is powered on by the control station 20, the program executes a function at step 228 to update the "powered on" data field of the memory element 92 to increment another minute. After step 228, or after a negative determination at step 226 (when a full minute is not timed out), the program proceeds to step 230. At step 230, the determination is made as to whether the cartridge has undergone an energy load equivalent to a soldering event load. If the determination is made that a soldering event has occurred, based upon the energy load experienced by the cartridge 26, the program proceeds to step 232. At step 232, the program updates the load number to the memory element 92. After step 232, or after a negative determination in step 230, the program proceeds to step 234, which is the end of the tip management program.

The foregoing program descriptions are merely exemplary and may be supplemented with subroutines to incorporate the additional functionalities of the tip management program to utilize other data components stored in the memory element 92.

[Automatic Temperature Adjustment and Calibration Record]

The system 10 of FIG. 6 depicts a cartridge 26 that is removably inserted into the handle 24 connected to the control station 20. As discussed above, the cartridge 26 can have any number of tip configurations. Generally, however, each cartridge 26 will include a heating element and a temperature sensor. The temperature sensor may be a thermocouple that is generally located inside of and proximate the tip, to try an accurately monitor the tip temperature. The temperature at the temperature sensor is determined by the control station 20 based upon the electromotive force of the thermocouple.

FIG. 6 also depicts a pair of thermometers 80 external to the control station 20 and cartridge 26. The thermometer may be hard wire connected to the control station 20 through the conversion box 86 as shown in FIG. 6. Alternatively, the thermometer 80 may connect to the control station 20 via an infra-red, optical, blue tooth (Registered trademark) or radio frequency data link. The temperature sensed by the external thermometer 80 may be used to monitor the accuracy of the temperature sensor inside of the tip of the cartridge 26. If the temperature of a cartridge tip that is powered on as measured by the thermometer 80 is different from the temperature determined from the temperature sensor in the cartridge 26, the control station 20 may update the set temperature for the cartridge 26.

In addition, the difference between the two temperature measurements provides and adjustment value that the control station 20 may record to the memory element 92 in the cartridge 26 as an offset temperature. The control station 20 may also record the calibration event data to the memory element 92 in the cartridge 26 and report the calibration event data to the host machine 40.

The control station 20 may include programed limitation parameters on the magnitude of the offset that can be accepted. Thus, the control station 20 may not allow an offset greater than a fixed number, for example 10 degrees, 50 degrees or even 100 degrees.

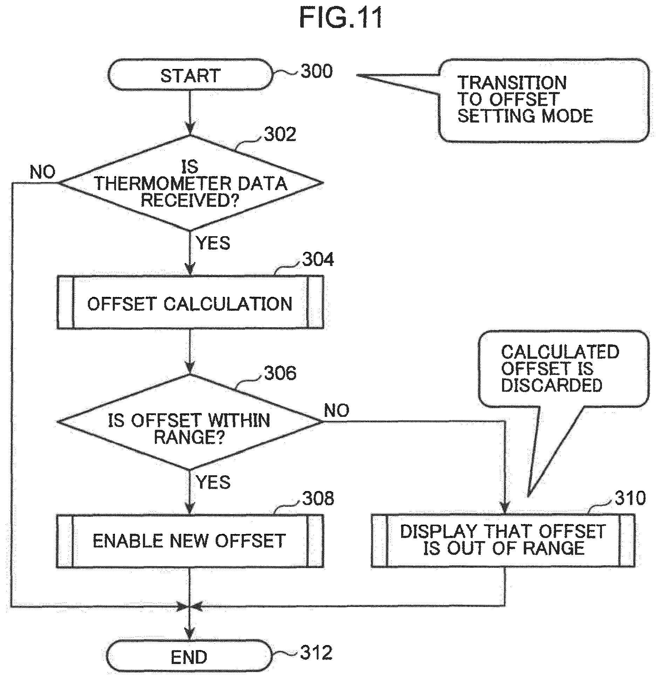

FIG. 11 depicts the steps for a basic program logic diagram to update an offset temperature for a cartridge 26. At the start step 300, the control station 20 is controlled to operate in an offset temperature determination mode, the cartridge 26 is powered to a controlled level, and the program proceeds to step 302. At step 302, the determination is made as to whether the control station 20 has received a cartridge tip temperature signal from thermometer 80. If at step 302 the determination is yes, the program proceeds to step 304 directly, or to an optional step 303 (not shown) in the case where a thermometer 80 is connected to the control station 20 and a determination is made as to whether the temperature signal from the thermometer 80 is within an acceptable range of the temperature as measured by the temperature sensor in the cartridge 26.

If the temperature signal from the thermometer 80 is not within the acceptable range, the control station 20 perceives that the thermometer 80 is not actually measuring the cartridge tip temperature and the program skips to step 312. However, if at step 302 the thermometer 80 measured tip temperature is within an appropriate range, the thermometer measurement is accepted and the program proceeds to step 304. At step 304, the control station compares the tip temperature as determined by the thermometer 80 to the temperature determined from the cartridge temperature sensor, to calculate the offset value. It should be noted that the offset value may be a positive or negative number, as the performance and accuracy of the cartridge temperature sensor may degrade over time.

After step 304, the program proceeds to step 306 where a determination is made as to whether the offset value is within an acceptable range. If at step 306 the offset value is within the acceptable range, the program proceeds to step 308, where the control station 20 validates the new offset value and writes the new offset value to the memory element 92 in the cartridge 26. If at step 306 the determination is that the offset value is outside of the acceptable range, the program proceeds to step 310. At step 310, the out-of-range offset value is discarded and the control station 20 alerts the operator that the offset value was unacceptable. For example, an offset value greater than fifty degrees may be deemed outside of the acceptable range and the control station 20 may display an indication that the cartridge 26 is defective. After the completion of step 308 or step 312, and after a negative determination is made at step 302, the program proceeds to step 312, where the program ends.

The foregoing program descriptions are exemplary, and may be supplemented with subroutines to incorporate the additional functionalities of the thermometers 80 and the data components stored in the memory element 92.

[Motion Sensor]

The handle 24 of the system 10 depicted in FIG. 6 preferably includes an acceleration sensor 34. The acceleration sensor 34 is preferably a six axis acceleration sensor, which provides an acceleration data output signal to the control station reflecting any all movements of the handle 24, and thus the cartridge 26. The control station 20 may use the data signal provided by the acceleration sensor 34 to monitor the activities and operator's use of the cartridge 26. Thus, if the control station 20 does not receive any signal indicative of movement of the acceleration sensor 34 for a predetermined period of time, for example one minute, the control station 20 will determine that the tool is not being used, so it may be powered down or placed in a "sleep" mode to conserve power, or extend tip life.

Alternatively, if the acceleration sensor 34 provides a signal indicative of a free fall of the handle 24, the control station 20 may immediately shut off power to the cartridge 26. As another alternative, the control station 20 may use the data provide by the acceleration sensor 34 to conclude that the user is cleaning the tip of the cartridge 26, as the movement of the acceleration sensor 34 is indicative of brush strokes across a cleaning pad as opposed to movements typical of a soldering operation.

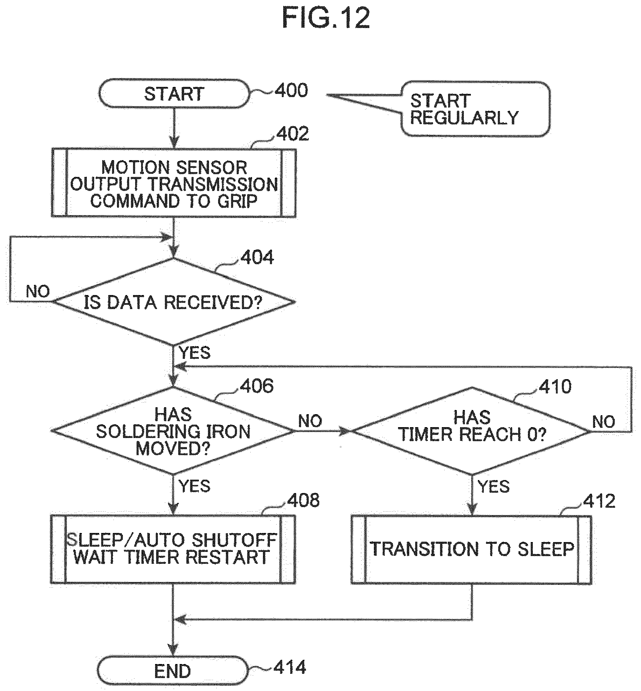

FIG. 12 depicts the steps for a basic program logic diagram for using the acceleration sensor data to control a sleep or shutoff mode. The acceleration sensor program may be activated periodically whenever the control station 20 is on. Alternatively, the program may initiate whenever the control station has not received a data signal from the acceleration sensor 34 for a certain time interval, for example 30 seconds. The program initiates at the "start" step 400, and proceeds to step 402, where the control station sends a command query signal to the acceleration sensor 34 to provide an output signal confirming that the acceleration sensor 34 is operational. The program then proceeds to step 404 where the program determines if an operational signal has been received from the acceleration sensor 34.

If no such signal is received, the program loops through step 404 until an operational signal is received, at which point the control program proceeds to step 406. At step 406, the control program monitors the acceleration sensor 34 for a signal indicative of movement of the handle 24. Upon receipt of a signal indicative of movement of the handle 24, the program proceeds to step 408, where the program restarts the sleep or automatic shutoff timer and then the program moves to the end step 414. However, if at step 406 the control station 20 does not receive a signal indicative of movement of the handle 24 for a predetermined length of time, for example 30 seconds or 60 seconds, then the program may proceed to step 410, where the determination is made as to whether a timer has timed out the predetermined length of time.

If not, the system returns to step 406, if yes, the system determines that the soldering iron is not being used and the program proceeds to step 412, where the program turns off power to the cartridge 26, assuming it is not being used because it is not moving. The program then proceeds from step 412 to step 414 if the system is not activated from the sleep mode in a predetermined period of time by the acceleration sensor 34, which may restart the power to the cartridge at step 406, otherwise the system remains in the sleep mode of step 412.

The foregoing program description is merely exemplary, and may be supplemented with subroutines to incorporate the additional functionalities of the acceleration sensor 34, for example, monitoring for any acceleration sensor signal equivalent to 9.8 meters per second per second (9.8m1s2) reflecting free fall of the handle, and immediately shutting of power to the cartridge 26.

[Internet of Things (IoT) Compatibility]

The system 10 depicted in FIG. 6 includes the control station 20, gateway box 30 and host machine 40. As also depicted the system 10 may include sensor devices 28, including a barcode reader 82 and an RFID reader 84.

The readers 82 and 84 may be used to scan or read bar codes or RFID tags on or inside of the soldering devices as well as those on the work pieces, for example a circuit board or electrical component or device that the operator is soldering. The work piece may have a unique serial number that may be read by one of the readers 82 and 84, with the serial number being reported to the control station 20 and the host machine 40. The host machine 40, as well as the control station 20 if appropriate, can then maintain a record of the soldering events associated with the serial number of the work piece.

The gateway box 30 allows the interconnection of a number of individual control stations 20, to the host machine 40. As depicted, the gateway box 30 includes eight (8) communication ports allowing connection to eight control stations 20, 20-2, 20-3, 20-4, etc. With an increased number of control stations 20 reporting to the host machine 40, the host machine 40 can collect a substantial amount of information from the control stations 20, the memory elements 92 in the cartridges 26 and the sensor devices 28.

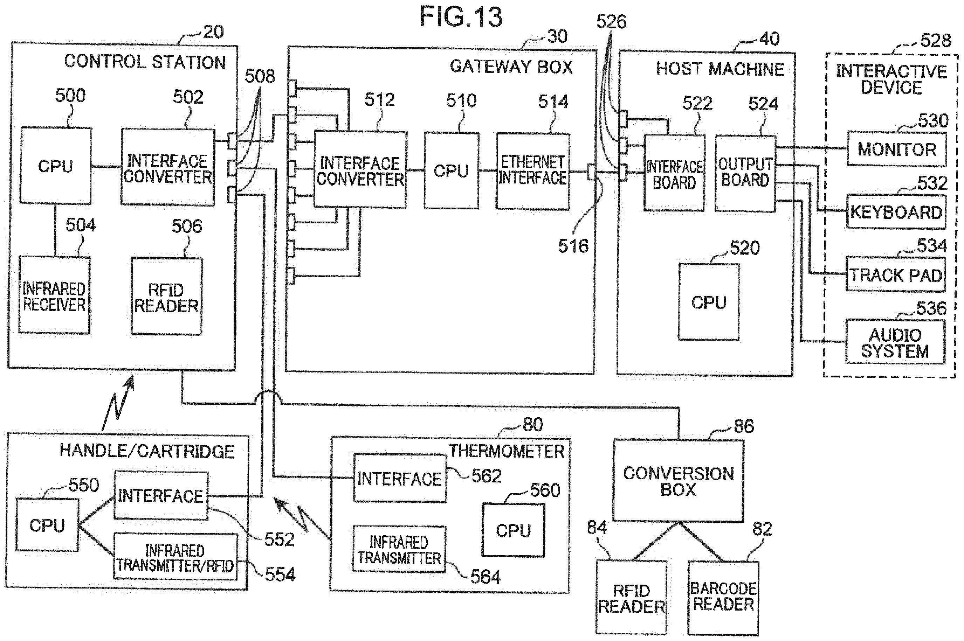

FIG. 13 provides a block diagram of the components of the system 10 and their main subcomponents providing communication within the system 10. As depicted, the control station 20 may include a central processing unit (CPU) 500, an interface converter 502, an infrared receiver 504, an RFID reader 506 and at least one communication port 508. The gateway box 30 includes a CPU 510, an interface converter 512 and an Ethernet interface 514. The interface converter 512 is preferably configured to be connected to multiple communication ports 516, to allow connection to a number of control stations 20 as well as related soldering system devices, for example blowers, exhaust fans and de-soldering stations. The host machine 40 also includes a CPU 520 with an associated memory, interface boards 522, output boards 524, communication ports 526 and interactive devices 528, for example a monitor 530, keyboard 532, a mouse or track pad 534 and an audio system 536.

As depicted schematically in the block diagram of FIG. 13, the CPU 500 of the control station 20 may be interconnected to the CPU 510 of the gateway box 30 through the control stations' interface converter 502, communication port 508, a wiring harness or non-wired connection connecting the control station 20 to the communication port 516 and the interface converter 512 of the gateway box 30. The gateway box 30 processes the signals from a number of control stations 20 within the CPU 510, and then outputs data to the host machine 40 through the Ethernet interface 514, communication port 516 an Ethernet cable connected to a communication port 526 on the host machine 40, and the interface board 522 of the host machine 40. The interface board 522 is connected to the CPU520, which processes the data from the control stations 20 and stores the data in its associated memory. The interactive devices 528 allow human operators to interact with the host machine 40, and thus the control stations 20.

As also schematically depicted in FIG. 13, the handle 24 of the cartridge 26 or the cartridge 26 itself, may include a CPU 550 wired connection via an interface 552 or connected an infrared transmitter 554 to allow communication to the control station 20, either through a hard-wired connection via the interface 552, or using the infrared transmitter 554 communicating with the infrared receiver 504 of the control station 20. The data communication between the handle 24 of the cartridge 26, or the cartridge 26 itself and control station 20 may alternatively use wireless communication methods other than infrared communication methods such as radio frequency identification (RFID) communication methods. Similarly, the thermometer 80 may include a CPU 560 and an interface 562 or an infrared transmitter 564, to allow communication to the control station 20, either through a hard-wired connection via the interface 562, or using the infrared transmitter 564 communicating with the infrared receiver 504 of the control station 20. The wireless communication of thermometer 80 may also use other types of wireless communication methods such as RFID methods.

The external to control station barcode reader 82 and the RFID reader 84 and a thermometer 80 are also depicted schematically in FIG. 13 as being connected to the control station 20 through a conversion box 86. However it should be appreciated that the conversion box 86 may be a board inside of the control station 20.

The schematic depiction of the system 10 in FIG. 13 illustrates the intercommunication capabilities of the system 10, and the communication of data concerning the soldering operations and components that may be supported by the system 10, interactive with the IoT. For example, when an operator begins working on a work or device that includes a barcode or RFID device, the operator can scan the work or device with the appropriate scanner 82 or 84, so that the control station 20 can identify the device and report to the host machine 40. If the host machine 40 is programmed to anticipate that there will be eight soldering events for the work or device, the host machine 40 can output an alert to the operator, either directly or through the control station 20, to prompt the operator to scan the next work or device after each set of eight soldering tasks.

When the host machine 40 is provided with the data identifying the work or device to be soldered, the host machine 40 may output information that guides the operator through the soldering steps required for the particular work to a monitor 530 of the workstation. During the soldering operation, the control station 20 may record information concerning each soldering activity, and report the information to the host machine 40. For example, the control station 20 may identify eight soldering events, based on the load applied to the cartridge as discussed above, and confirm that each soldering event was successful. The control station 20 may also report the usage of a specific cartridge 26, identified for example by its bar code or RFID device, to the host machine 40, which records the data and provides an output instruction to the control station 20 to update the usage data in the memory element 92 of the cartridge 26. When the operator completes the soldering tasks on the work or device and scans the next work to be soldered, the host machine 40 will have the data to confirm that the eight required soldering tasks were completed.

If, during the soldering process on the subsequent work, the control station 20 provides data to the host machine 40 for only seven soldering tasks, the host machine 40 may be programmed to alert the operator, for example by a screen prompt or audio prompt, to perform the eight soldering tasks. In addition, the host machine 40 may record the data for each of the soldering tasks associated with a particular work based upon its serial number, so that the soldering operations performed on the work may be recalled in the event of defects or service issues in subsequent testing or usage.

The communication capabilities for the control stations 20 and the host machine 40 may also be used to efficiently program the control stations 20 with information concerning the anticipated soldering tasks, the materials being used or soldered, and the cartridges.

For example, at the beginning of a new project or production cycle, the host machine 40 may instruct each of the control stations to use a specific type of cartridge design and provide a specific set temperature as well as minimum and maximum operating temperatures for the cartridges 26, because of design constraints on the circuit of the work to be soldered.

Also, the host machine 40 can maintain a record of the offset temperature requirement of each cartridge 26, for example based upon its serial number, so that if a cartridge 26 is shared between control stations 20, the respective control station 20 can receive an update for the offset temperature requirement of a specific cartridge 26 even if the cartridge 26 does not have a memory element 92. Also, the host machine 40 may be able to maintain and recall for use a record of the offset temperature requirement for a specific tip by receiving or recognizing the tip serial number or tip shape. Alternatively, the host machine 40 may advise the control station 20 that the amount of power required for a specific soldering task and a particular cartridge design should be in the range of five to ten joules. If the control station 20 or the host machine 40 subsequently identifies a power usage outside of that range during a soldering operation, the control station 20 may provide an alert to the operator indicating a defect in the soldering operation or the cartridge 26 itself. The predetermined power usage is also beneficial in the training process, as it may be displayed on the control station 20, so that a new operator can see the progress of the soldering operation.

The IoT compatibility of the system 10, and the data managed by the host machine 40, may provide substantial benefits to the operator and the end users. For example, if the soldering data associated with each of the eight soldering tasks of the prior example are recorded to the host machine 40, the data may be recalled and reviewed in the event of a subsequent failure or defect for a specific device identified by its barcode or RFID device. For the facility in which the control stations 20 are being used, the IoT compatibility of the system 10 may be used to monitor production speed for particular control stations 20 or operators. This information may also be used to assist in training new operators by having efficient operators provide the training. Also, the host machine 40 may maintain information concerning the life cycles of various cartridges 26 and identify when replacements should be ordered. As noted in the example above, the host machine 40 may efficiently update the number of control stations 20, to rewrite control parameters such as set temperature and temperature ranges, when work pieces have new demands, requirements, or restrictions. Because the host machine 40 may be connected to and receive data from the number of control stations 20, the host machine 40 may be programmed to identify control stations 20 that are operating inefficiently or improperly.

The IoT compatibility of the system 10, and the data managed by the host machine 40, may also provide substantial benefits to supplier of the system components. For example, if the host machine 40 may be connected to the internet, the host machine 40 could report the cartridge usage data, to the supplier of the system, providing feedback that may be useful in the manufacturing process and identifying cartridge replacement requirements. Also, software updates for the control stations 20 may be delivered to the host machine 40 using the internet, to efficiently implement the updates.

Intercommunication of the data between control station 20, gateway box 30, host machine 40, interactive devices 528, thermometers 80, and handle 24 and cartridge 26 in FIG. 13 can be either through hard-wired connections or wireless communication protocols.

The invention has been described in detail above in connection with the figures, however it should be understood that the system may include other components and enable other functions. Those skilled in the art will appreciate that the foregoing disclosure is meant to be exemplary and specification and the figures are provided to explain the present invention, without intending to limit the potential modes of carrying out the present invention. The scope of the invention is defined only by the appended claims.

**Industrial Applicability**

The present invention can provide a soldering iron control device.

**Claims**

1. A soldering iron control device (100) that allows electrical connection to a soldering iron (200) and controls a temperature of a tip (221) of the soldering iron (200), the soldering iron control device (100) comprising:

    a first storage unit (110) configured to store in advance a first amount of power to be supplied to the soldering iron (200) in an idling state where the tip (221) is noncontact and the temperature of the tip (221) is maintained within a predetermined range including a set temperature;
    a measurement unit (111) configured to measure, when the tip (221) enters a load state where the temperature of the tip (221) decreases by a predetermined amount or more from the set temperature by the tip (221) coming into contact with a workpiece, a third amount of power obtained by subtracting the first amount of power from a second amount of power to be supplied to the soldering iron (200) in the load state;
    a determination unit (112) configured to determine whether the third amount of power exceeds a predetermined threshold; and
    a notification unit (114) configured to make notification when it is determined that the third amount of power exceeds the threshold.

2. The soldering iron control device (100) according to claim 1, wherein the threshold includes at least one of a first threshold to be used to determine whether heating of the workpiece and solder is insufficient and a second threshold to be used to determine whether the workpiece and the solder are overheated.

3. The soldering iron control device (100) according to claim 1 or 2, further comprising:

    an input unit (106) configured to input a table (1131) that associates a soldering condition with the threshold; and
a second storage unit (113) configured to store in advance the table (1131) that is input by using the input unit (106),
wherein when the condition is input by using the input unit (106), the determination unit (112) reads the threshold corresponding to the input condition from the second storage unit (113), and determines whether the third amount of power exceeds the threshold.

4.  The soldering iron control device (100) according to any one of claims 1 to 3, wherein

the soldering iron (200) includes a handle part (210) and a cartridge (220) that is attachable to and detachable from the handle part (210) and includes the tip (221) and a nonvolatile memory (224), and
the threshold is stored in advance in the nonvolatile memory (224).

5.  The soldering iron control device (100) according to any one of claims 1 to 4, wherein the measurement unit (111) measures the third amount of power by repeatedly measuring the second amount of power in units of a period used to calculate the first amount of power, repeatedly calculating a value obtained by subtracting the first amount of power from the second amount of power in units of the period, and integrating the value.

**Patentansprüche**

1.  Lötkolben-Steuer- bzw. -Regelvorrichtung (100), die eine elektrische Verbindung mit einem Lötkolben (200) ermöglicht und eine Temperatur einer Spitze (221) des Lötkolbens (200) steuert bzw. regelt, wobei die Lötkolben-Steuer- bzw. -Regelvorrichtung (100) umfasst:

eine erste Speichereinheit (110), die konfiguriert ist, im Voraus einen ersten Betrag an Leistung zu speichern, die dem Lötkolben (200) in einem Leerlaufzustand zuzuführen ist, in dem die Spitze (221) kontaktlos ist und die Temperatur der Spitze (221) innerhalb eines vorbestimmten Bereichs gehalten wird, der eine festgelegte Temperatur beinhaltet,
eine Messeinheit (111), die konfiguriert ist, wenn die Spitze (221) in einen Lade- bzw. Belastungszustand eintritt, in dem die Temperatur der Spitze (221) um einen vorbestimmten Betrag oder mehr von der festgelegten Temperatur abfällt, indem die Spitze (221) mit einem Werkstück in Kontakt kommt, einen dritten Betrag an Leistung zu messen, der durch Subtrahieren des ersten Betrags an Leistung von einem zweiten Betrag an Leistung erhalten wird, die dem Lötkolben (200) in dem Belastungszustand zuzuführen ist, eine Bestimmungseinheit (112), die konfiguriert ist, zu bestimmen, ob der dritte Betrag an Leistung einen vorbestimmten Schwellenwert überschreitet; und
eine Benachrichtigungseinheit (114), die konfiguriert ist, eine Benachrichtigung vorzunehmen, wenn bestimmt wird, dass der dritte Betrag an Leistung den Schwellenwert überschreitet.

2.  Lötkolben-Steuer- bzw. -Regelvorrichtung (100) nach Anspruch 1, wobei der Schwellwert zumindest einen von einem ersten Schwellwert, der zu verwenden ist, um zu bestimmen, ob die Erwärmung des Werkstücks und des Lötmittels unzureichend ist, und einem zweiten Schwellwert beinhaltet, der zu verwenden ist, um zu bestimmen, ob das Werkstück und das Lötmittel überhitzt sind.

3.  Lötkolben-Steuer- bzw. -Regelvorrichtung (100) nach Anspruch 1 oder 2, ferner umfassend:

eine Eingabeeinheit (106), die konfiguriert ist, eine Tabelle (1131) einzugeben, die eine Lötbedingung mit dem Schwellenwert verknüpft; und
eine zweite Speichereinheit (113), die konfiguriert ist, die Tabelle (1131), die unter Verwendung der Eingabeeinheit (106) eingegeben wird, im Voraus zu speichern,
wobei, wenn die Bedingung unter Verwendung der Eingabeeinheit (106) eingegeben wird, die Bestimmungseinheit (112) den Schwellenwert entsprechend der Eingabebedingung aus der zweiten Speichereinheit (113) liest und bestimmt, ob der dritte Betrag an Leistung den Schwellenwert überschreitet.

4.  Lötkolben-Steuer- bzw. -Regelvorrichtung (100) nach einem der Ansprüche 1 bis 3, wobei

der Lötkolben (200) einen Griffteil (210) und eine Kartusche bzw. Patrone umfasst, die an dem Griffteil (210) anbringbar und von diesem abnehmbar ist und die Spitze (221) und einen nichtflüchtigen Speicher enthält, und
der Schwellwert im Voraus in dem nichtflüchtigen Speicher gespeichert wird.

5.  Lötkolben-Steuer- bzw. -Regelvorrichtung (100) nach einem der Ansprüche 1 bis 4, wobei die Messeinheit (111) den dritten Betrag an Leistung durch wiederholtes Messen des zweiten Betrags an Leistung in Einheiten einer Periode, die zum Berechnen des ersten Betrags an Leistung verwendet wird, wiederholtes Berechnen eines Werts, der durch Subtrahieren des ersten Betrags an Leistung von dem zweiten Betrag an Leistung in Einheiten der Periode erhalten wird, und Integrieren des Werts misst.

## Revendications

1. Dispositif de commande de fer à souder (100) qui permet une connexion électrique à un fer à souder (200) et commande une température d'une pointe (221) du fer à souder (200), le dispositif de commande de fer à souder (100) comprenant :

   un premier module de stockage (110) configuré pour stocker à l'avance une première quantité de puissance devant être fournie au fer à souder (200) dans un état à vide où la pointe (221) n'est pas en contact et la température de la pointe (221) est maintenue au sein d'une plage prédéterminée incluant une température définie ;
   un module de mesure (111) configuré pour mesurer, lorsque la pointe (221) entre dans un état de charge où la température de la pointe (221) diminue d'une quantité prédéterminée ou plus par rapport à la température définie par la pointe (221) venant en contact avec une pièce à usiner, une troisième quantité de puissance obtenue en soustrayant la première quantité de puissance d'une deuxième quantité de puissance devant être fournie au fer à souder (200) dans l'état de charge ;
   un module de détermination (112) configuré pour déterminer si la troisième quantité de puissance dépasse un seuil prédéterminé ; et
   un module de notification (114) configuré pour effectuer une notification lorsqu'il est déterminé que la troisième quantité de puissance dépasse le seuil.

2. Dispositif de commande de fer à souder (100) selon la revendication 1, dans lequel le seuil inclut au moins un d'un premier seuil devant être utilisé pour déterminer si le chauffage de la pièce à usiner et la soudure sont insuffisantes et d'un second seuil devant être utilisé pour déterminer si la pièce à usiner et la soudure sont surchauffées.

3. Dispositif de commande de fer à souder (100) selon la revendication 1 ou 2, comprenant en outre :

   un module d'entrée (106) configuré pour entrer une table (1131) qui associe une condition de soudure au seuil ; et
   un second module de stockage (113) configuré pour stocker à l'avance la table (1131) qui est entrée en utilisant le module d'entrée (106),
   dans lequel lorsque la condition est entrée en utilisant le module d'entrée (106),

   le module de détermination (112) lit le seuil correspondant à la condition d'entrée depuis le second module de stockage (113), et détermine si la troisième quantité de puissance dépasse le seuil.

4. Dispositif de commande de fer à souder (100) selon l'une quelconque des revendications 1 à 3, dans lequel

   le fer à souder (200) inclut une partie de poignée (210) et une cartouche (220) qui peut être reliée à et peut être détachée de la partie de poignée (210), et inclut la pointe (221) et une mémoire non volatile (224), et
   le seuil est stocké à l'avance dans la mémoire non volatile (224).

5. Dispositif de commande de fer à souder (100) selon l'une quelconque des revendications 1 à 4, dans lequel le module de mesure (111) mesure la troisième quantité de puissance en mesurant de manière répétée la deuxième quantité de puissance en unités d'une période utilisée pour calculer la première quantité de puissance, calculant de manière répétée une valeur obtenue en soustrayant la première quantité de puissance de la deuxième quantité de puissance en unités de la période, et intégrant la valeur.

# FIG.1

1000

FIG.2

EP 3 804 897 B1

# FIG.3

# FIG.4

# FIG.5A

START MEASUREMENT OF
THIRD AMOUNT OF POWER

↓ S1

READ FIRST AND SECOND
THRESHOLDS ASSOCIATED
WITH SOLDERING CONDITIONS

↓ S2

READ FIRST AMOUNT OF
POWER ASSOCIATED WITH
SET TEMPERATURE

↓

S3

TRANSITION
FROM IDLING STATE TO
LOAD STATE? — NO

↓ YES

S4

START MEASUREMENT OF
THIRD AMOUNT OF POWER

↓

(1)

# FIG.5B

FIG.6

# FIG.7

# FIG.8

# FIG.9

START ~100 → LOAD DETECTION STARTS EVERY CONTROL CYCLE

102
DOES SENSOR TEMPERATURE DECREASE?(= IS THERE CHANGE IN PULSES?)

NO

YES ~104

MEASUREMENT OF HEATER DRIVE VOLTAGE: Vh

~106

MEASUREMENT OF HEATER DRIVE CURRENT: Ih → $Eh = Vh \times Ih \times PR \times Tc$
PR: ENERGIZATION RATIO (NUMBER OF HEATER DRIVE PULSES/21)
Tc: CONTROL CYCLE (60Hz=0.175SEC)

~108

CALCULATION OF INPUT ENERGY: Eh

~110

ADDITION OF INPUT ENERGY

112
IS LOAD STATE CANCELED?

NO

YES ~114

DETERMINATION OF LOAD TIME, TOTAL INPUT ENERGY

~116

LOAD COUNTS + 1

END ~118

# FIG.10A

```
TIP MANAGEMENT                          (  START  )~200
STARTS
REGULARLY

                                         ◇ 202
                              NO    RECOVERY
                              ┌─────FROM GRIP ERROR OR
                                    RECOVERY FROM
                                    SENSOR ERROR
                                        ?
                                       YES
                                                    204
                              ┌──────────────────────────┐
BOARD BUILT IN                │ TIP INFORMATION TRANSMISSION │
GRIP READS                    │ INSTRUCTION TO GRIP          │
INFORMATION                   └──────────────────────────┘
FROM EEPROM
                                         206
                                    IS TIP FOR          NO
                                    LEADED SOLDER ──────┐
                                        ?
                                       YES        208
                              ┌──────────────────────────┐
DISPLAY REMAINS               │ DISPLAY THAT TIP IS        │
SAME UNLESS                   │ FOR LEADED SOLDER          │
INSTRUCTED                    └──────────────────────────┘
BY USER
                                         210
                       NO          IS THERE SET
                       ┌──────TEMPERATURE READING
                              INSTRUCTION?
                                       YES        212
                              ┌──────────────────────────┐
                              │ CHANGE SET                 │
                              │ TEMPERATURE TO             │
                              │ VALUE READ FROM TIP        │
                              └──────────────────────────┘
                                         214
                       NO          IS THERE
                       ┌──────OFFSET READING
                              INSTRUCTION?
                                       YES        216
                              ┌──────────────────────────┐
                              │ CHANGE OFFSET TO           │
                              │ VALUE READ FROM TIP        │
                              └──────────────────────────┘

                                        (1)
```

# FIG.10B

218 — IS THERE SET TEMPERATURE WRITING INSTRUCTION?

NO

YES

220 — TRANSMISSION OF SET TEMPERATURE TO GRIP

BOARD BUILT IN GRIP WRITES SET TEMPERATURE INTO EEPROM

222 — IS THERE OFFSET WRITING INSTRUCTION ?

NO

YES

224 — TRANSMISSION OF OFFSET TO GRIP

BOARD BUILT IN GRIP WRITES OFFSET INTO EEPROM

226 — HAS ONE MINUTE ELAPSED?

NO

YES

228 — TRANSMISSION OF HEATER POWERED TIME TO GRIP

BOARD BUILT IN GRIP WRITES HEATER ENERGIZATION TIME INTO EEPROM

230 — DOES LOAD COUNTS INCREASE?

NO

YES

232 — TRANSMISSION OF LOAD COUNTS TO GRIP

BOARD BUILT IN GRIP WRITES LOAD COUNTS INTO EEPROM

END — 234

# FIG.11

START 〜300

TRANSITION TO OFFSET SETTING MODE

302

NO ← IS THERMOMETER DATA RECEIVED?

YES

OFFSET CALCULATION 〜304

306

IS OFFSET WITHIN RANGE? → NO

CALCULATED OFFSET IS DISCARDED

YES

ENABLE NEW OFFSET 〜308

DISPLAY THAT OFFSET IS OUT OF RANGE 〜310

END 〜312

EP 3 804 897 B1

# FIG.12

START ~400

START REGULARLY

MOTION SENSOR OUTPUT TRANSMISSION COMMAND TO GRIP ~402

IS DATA RECEIVED? ~404

NO

YES

HAS SOLDERING IRON MOVED? ~406

NO → HAS TIMER REACH 0? ~410

NO

YES

SLEEP/AUTO SHUTOFF WAIT TIMER RESTART ~408

YES

TRANSITION TO SLEEP ~412

END ~414

FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2708967 A1

- US 62543797 B